(19) Europäisches Patentamt
European Patent Office
Office européen des brevets

(11) Veröffentlichungsnummer : **0 321 405 B1**

# (12) EUROPÄISCHE PATENTSCHRIFT

(45) Veröffentlichungstag der Patentschrift :
**26.02.92 Patentblatt 92/09**

(51) Int. Cl.$^5$ : **C07F 7/22,** C08K 5/57

(21) Anmeldenummer : **88810847.9**

(22) Anmeldetag : **08.12.88**

## (54) Organozinn-alkoxycarbonylphenylmercaptide und deren Verwendung.

Die Akte enthält technische Angaben, die nach dem Eingang der Anmeldung eingereicht wurden und die nicht in dieser Patentschrift enthalten sind.

(30) Priorität : **17.12.87 CH 4924/87**

(43) Veröffentlichungstag der Anmeldung :
**21.06.89 Patentblatt 89/25**

(45) Bekanntmachung des Hinweises auf die Patenterteilung :
**26.02.92 Patentblatt 92/09**

(84) Benannte Vertragsstaaten :
**BE DE FR GB IT NL**

(56) Entgegenhaltungen :
**DE-A- 2 447 499**
**US-A- 2 630 086**
**US-A- 2 648 650**
**US-A- 2 713 585**
**US-A- 2 731 482**
**US-A- 2 731 484**
**US-A- 3 507 827**
**US-A- 4 314 934**
**US-A- 4 554 368**

(73) Patentinhaber : **CIBA-GEIGY AG**
**Klybeckstrasse 141**
**CH-4002 Basel (CH)**

(72) Erfinder : **Abeler, Gerd, Dr.**
**Alter Wixhäuser Weg 61**
**W-6100 Darmstadt (DE)**

EP 0 321 405 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft neue Organozinn-alkoxycarbonylphenylmercaptide und deren Verwendung zum Stabilisieren von chlorhaltigen Thermoplasten gegen den schädigenden Einfluss von Licht und Wärme.

Aus den US-Patentschriften 2 731 482 und 2 731 484, sowie 2 713 585 sind Organozinnmercaptide der Formel

$$R_xSn(SR')_{4-x}$$

worin beispielsweise R′ gleich -2-Mercaptomethylbenzoat und $R_2$ gleich Alkyl oder Aryl sein kann, sowie x die Werte 1 oder 2 hat, bekannt.

Aus der US-Patentschrift 2 648 650 sind Verbindungen der Formel $R_2Sn(SR'COOR'')_2$ bekannt und insbesondere wird in Beispiel XVI die Verbindung Dibutylzinn S,S′-bis(methyl-thiosalicylat) beschrieben.

Die US-Patentschrift 3 507 827 beschreibt Verbindungen der Formel $R_1R_2Sn(S\text{-}Z_1\text{-}(COOR_3)_m)_2$, wobei die $\text{-}S\text{-}Z_1\text{-}(COOR_3)$-Gruppe beispielsweise aus einem Mercaptobenzoesäureester abgeleitet sein kann. Konfret offenbart und den Verbindungen der coorliegenden Anmeldung am nächs/liegenden ist die Verbindung Di-i-amylzinn-bis-S,S′-ortho-mercapto-i-bectylbenzoat.

Aus der DE-OS 24 47 499 sind wiederum allgemein Diorganozinn-mercaptide, hergestellt durch Kondensation eines Diorgano-zinnoxides oder -chlorides mit ein- oder mehrwertigen Mercaptanen aus der Verbindungsklasse der Mercaptocarbonsäureester, bekannt.

Die Verwendung von Organozinnverbindungen der allgemeinen Formel

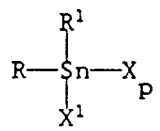 ,

wobei R und $R^1$ beispielsweise Alkyl, Aryl, Aralkyl oder Alkaryl und X und $X^1$ beispielsweise gleich

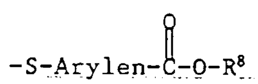 ,

wobei $R^8$ gleich Alkyl, Aryl, Aralkyl, Alkaryl usw. sein kann, zur Stabilisierung halogenhaltiger Polymere zusammen mit Mercaptophenolen, wird in der US-PS 4 314 934 vorgeschlagen.

Weiters lässt sich eine generische Formel für Organozinnmercaptide

$$R_nSn(Sr^1COOR^2)_{4-n},$$

wobei R gleich Alkyl, Aryl usw., $R^1$ z.B. gleich Arylen und $R^2$ eine Alkyl-, Aryl- usw. -Gruppe sein kann, aus der DE-OS 26 39 086 entnehmen. Die weitere Lehre dieser Patentschrift ist die Kombination von Hydroxybenzophenonen mit Organozinnschwefelverbindungen zur Stabilisierung von Polyolefinen gegen schädliche Einflüsse von Licht und/oder Hitze.

Ausdrücklich bekannt geworden sind aus dem oben angegebenen Stande der Technik die Methyl-, Butyl und tert-Butylzinnverbindungen mit den Methyl-, Ethyl-, Butyl- und iso-Butylestern der Thiosalicylsäure.

Diese bekannt gewordenen Organozinnmercaptoverbindungen haben aber in die Praxis nie Eingang gefunden. Dies mag zum Beispiel daran liegen, dass trotz ihrer im allgemeinen sehr hohen Wirksamkeit die Organozinnschwefelstabilisatoren nicht allen Anforderungen gerecht werden können. Ihre Einsatzmöglichkeit ist z.B. dann eingeschränkt, wenn eine hohe Licht- und Witterungsbeständigkeit des Fertigartikels gewünscht wird. Eine weitere Einschränkung kann sich auf dem Gebiet von weichgemachtem PVC dann ergeben, wenn sehr hohe Anforderungen an den Geruch des Fertigartikels gestellt werden, wie dies in Innenräumen z.B. von Kraftfahrzeugen erwünscht ist. Im Fall von kohlensäurefreiem Mineralwasser haben sich organozinnstabilisierte Hart-PVC-Flaschen als ungünstig erwiesen, weil eine geschmackliche Beeinträchtigung des Füllgutes nicht ausgeschlossen werden kann. Auf diesem Sektor hat sich daher die Stabilisierung mit Calcium/Zink-Stabilisatoren durchgesetzt, obwohl die Zinnstabilisatoren technisch gesehen wegen ihrer höheren Wirksamkeit erwünscht gewesen wären.

Das Auffinden von neuen Organozinnstabilisatoren mit verbesserten organoleptischen Eigenschaften ist daher dringend erwünscht, jedoch technisch nur dann bedeutsam, wenn das sonstige Eigenschaftsbild, wie die überragende Wirksamkeit, die gute Substratverträglichkeit, eine geringe rheologische Beeinflussung der

Formmasse, eine geringe Plate-out-Neigung während der Verarbeitung, sowie die Ungiftigkeit, gleichfalls gegeben ist.

Es wurde nun gefunden, dass bestimmte Organozinn(carboalkoxy)phenylmercaptide einen besonders günstigen Einfluss auf das Geruchsverhalten von stabilisierten chlorhaltigen Polymerisaten bei der thermoplastischen Verarbeitung und dem späteren Gebrauch der daraus hergestellten Formmassen besitzen, dies unter Beibehaltung der für diese Stabilisatorenklasse günstigen Eigenschaften.

Gegenstand der Erfindung sind Verbindungen der Formel I

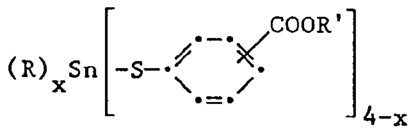

(I)

worin R $C_8$-$C_{14}$-Alkyl, Phenyl, $C_7$-$C_9$ Aralkyl oder R″OOC-$CH_2$-$CH_2$-bedeutet, R′ $C_2$-$C_{18}$-Alkyl, $C_5$-$C_{12}$ Cycloalkyl, Phenyl, $C_7$-$C_{30}$ Alkaryl oder $C_7$-$C_{18}$ Aralkyl bedeutet und R″ $C_1$-$C_{14}$ Alkyl, Phenyl, oder $C_7$-$C_9$ Aralkyl bedeutet und x gleich 1 oder 2 ist, mit der Massgabe, dass, wenn x = 1 ist, die Gruppe COOR′ nicht in ortho-Stellung zur Mercaptogruppe steht.

R als $C_8$-$C_{14}$-Alkyl ist beispielsweise Octyl, 2-Ethylhexyl (iso-Octyl), Nonyl, Decyl, Undecyl, Dodecyl, Tridecyl oder Tetradecyl.

R als $C_7$-$C_9$-Aralkyl ist beispielsweise Benzyl, Methylbenzyl oder Hydroxybenzyl.

R′ als $C_2$-$C_{18}$-Alkyl sind beispielsweise Ethyl, Propyl, Isopropyl, Butyl, Isobutyl, 2-Butyl, t-Butyl, Pentyl, Isopentyl, Hexyl, Heptyl, 3-Heptyl, Octyl, 2-Ethylhexyl, Nonyl, Decyl, Undecyl, Dodecyl, Tridecyl, Tetradecyl, Pentadecyl, Hexadecyl, Octadecyl oder Heptadecyl.

R′ als $C_5$-$C_{12}$-Cycloalkyl sind beispielsweise eine Cycloalkylgruppe der Formel

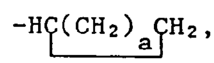

wobei a eine ganze Zahl von 3 bis 10 ist.

Diese Cycloalkylgruppe kann gegebenenfalls durch $C_1$-$C_4$-Alkyl substituiert sein. Beispiele dafür sind Cyclopentyl, Cyclohexyl, Methylcyclohexyl, Dimethylcyclohexyl, Trimethylcyclohexyl, t-Butylcyclohexyl, Cyclooctyl und Cyclododecyl. Gegebenenfalls durch $C_1$-$C_4$ -Alkyl substituiertes Cyclohexyl wird besonders bevorzugt.

R′ als $C_7$-$C_{30}$Alkaryl kann z.B. Tolyl, Xylyl, 4-t-Butylphenyl, 3-Methoxyphenyl, 4-Propoxyphenyl, 3-Butoxycarbonylphenyl, 3-Nitrophenyl oder 4-Methyl-3-nitrophenyl bedeuten oder kann mit Alkoxycarbonyl substituiertes Phenyl sein, wobei Alkoxy z.B. Methoxy, Ethoxy, Isopropoxy oder n-Butoxy sein kann.

R′ als $C_7$-$C_{18}$-Aralkyl kann gegebenenfalls am Phenylring durch $C_1$-$C_4$-Alkyl und/oder OH substituiertes $C_7$-$C_{10}$-Phenylalkyl sein. Beispiele dafür sind Benzyl, Methylbenzyl, Hydroxybenzyl, 3,5-Di-t-butyl-4-hydroxybenzyl und 2-(3,5-Di-t-butyl-4-hydroxyphenyl)-ethyl. Gegebenenfalls substituiertes Benzyl wird bevorzugt.

R″ als $C_1$-$C_{14}$-Alkyl ist beispielsweise Methyl, Ethyl, Propyl, Isopropyl, Butyl, Isobutyl, t-Butyl, Pentyl, Hexyl, Heptyl, Octyl, 2-Ethylhexyl, Decyl oder Dodecyl. Geradkettiges oder verzweigtes $C_1$-$C_4$-Alkyl wird bevorzugt.

R″ als $C_7$-$C_9$-Aralkyl ist beispielsweise Benzyl, Methylbenzyl oder Hydroxybenzyl.

Zweckmässig sind Verbindungen mit der Formel I, worin R gleich Alkyl mit 8 bis 12 C-Atomen oder Carbo-$C_2$-$C_5$alkoxyethyl bedeutet. Vorzugsweise stellt R iso-Octyl, Dodecyl oder Carbobutoxyethyl dar. Zu den zweckmässigen verbindungen mit der Formel I gehören auch solche, worin R′ Alkyl mit 2 bis 12 und vorzugsweise mit 2 bis 8 C-Atomen ist.

Die veresterte Säuregruppe am Phenylenrest kann in ortho-, meta-oder para-Stellung zur Mercaptogruppe stehen, zweckmässig ist die ortho-oder para-Stellung. Dies mit der Massgabe, dass von den Monoalkylzinntriscarboalkoxyphenylmercaptiden nur die entsprechenden meta-und para-Mercaptobenzosäureester von vorliegender Erfindung mitumfasst und die entsprechenden ortho-Mercaptobenzoesäureester ausgeschlossen werden.

Zu den bevorzugten Verbindungen der Formel I gehören jedoch solche, in denen die veresterte Säuregruppe am Phenylrest in ortho-Stellung zur Mercaptogruppe steht und der Formel

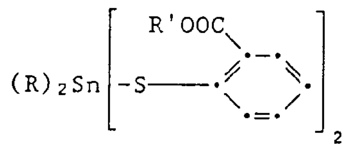

entsprechen.

Eine besonders bevorzugte verbindung hat die Formel

$$(n\text{-}C_8H_{17})_2Sn(\text{-}S\text{-}p\text{-}C_6H_4\text{-}COOC_8H_{17})_2.$$

Die Herstellung der Verbindungen der Formel I mit x = 2 kann nach an sich bekannten Methoden, durch Umsetzung von geeigneten Organozinnverbindungen mit entsprechenden Mercaptobenzosäureestern erfolgen. Als Organozinnverbindungen eignen sich insbesondere Diorganozinnoxide, die unter Freisetzung von Wasser zu den Verbindungen der Formel I reagieren.

Geeignet sind ferner Diorganozinnhalogenide, insbesondere Dialkylzinndichloride, die zur vollständigen Umsetzung zu den Dimercaptiden den Zusatz von Halogenwasserstoffakzeptoren benötigen. Die besten Resultate können mit den folgenden basischen Reagenzien erzielt werden, unter der Voraussetzung, dass durch sorgfältige Kontrolle des pH-Wertes während der Reaktion eine Verseifung der Estergruppen vermieden wird: Oxide, Hydroxide, wie z.B. Natriumhydroxid, Carbonate, wie z.B. Na- oder K-carbonat oder tertiäre Amine, wie z.B. Triethylamin. Die genannten Herstellverfahren werden durch die folgenden Reaktionsgleichungen illustriert.

Das Reaktionsschema des Verfahrens zur Herstellung der Mercaptoderivate, beispielhaft ausgehend von einem Organozinnoxid wird durch folgende Gleichung dargestellt:

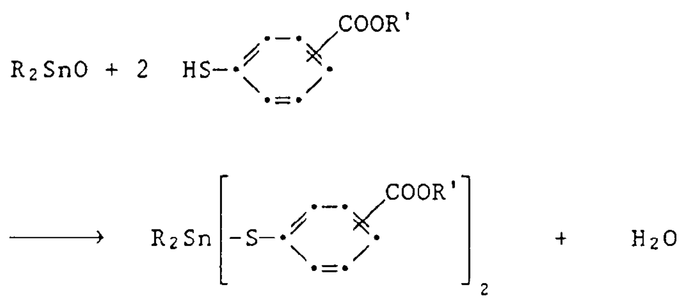

Beispielhaft ausgehend von einem Diorganozinnchlorid stellt sich folgende Gleichung dar:

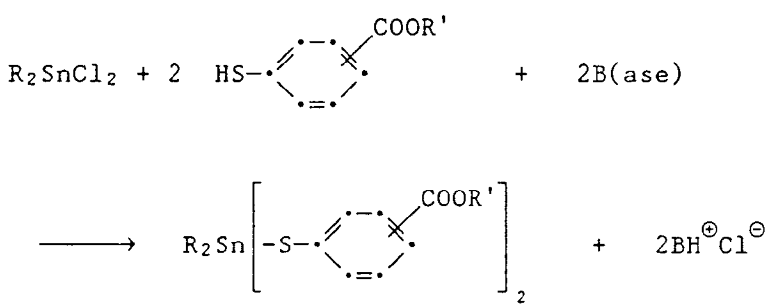

In analoger Weise können m- und p-Mercaptobenzoesäureester mit Monorganozinnoxiden bzw. -halogeniden zu Verbindungen der allgemeinen Formel I mit x = 1 umgesetzt werden.

Für die Reaktion der Stannonsäure oder eines Monoorganozinnchlorids mit der Mercaptoverbindung ergibt sich folgende Gleichung

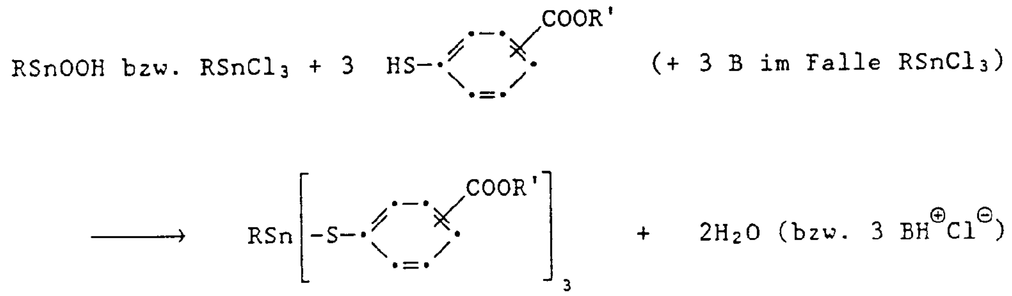


Wird bei der Reaktion Wasser aus der Kondensation der Säure mit dem Oxid oder Hydroxid freigesetzt, wird die Reaktion beispielsweise im vakuum bei erhöhter Temperatur bis ca. 100°C zur laufenden Entfernung des während der Reaktion gebildeten Wassers, ausgeführt.

Bei der Anwendung von Organozinnhalogeniden ist es vorteilhaft, in Gegenwart von Wasser und einer basischen Substanz zu arbeiten, um die sich bildende Halogenwasserstoffsäure zu binden und zu neutralisieren. Die Temperatur ist dabei nicht kritisch und kann bevorzugt zwischen Raumtemperatur und 40°C gehalten werden.

Gegebenenfalls kann die Reaktion auch in inerten Lösungsmitteln ausgeführt werden. Solche Lösungsmittel sind z.B. Toluol, Benzol, Methylalkohol, Petroläther, Xylol usw. oder chlorierte Kohlenwasserstoffe, wie Kohlenstofftetrachlorid, Trichlorethylen, Tetrachlorethylen, Hexachlorbutadien usw. Auch Zweiphasensysteme aus inerten organischen Lösungsmitteln und Wasser sind als Reaktionsmedium fallweise zweckmässig.

Die genannten Herstellungsverfahren ermöglichen den Einsatz der Ausgangsprodukte in stöchiometrischen Mengenverhältnissen, also ohne dass die eine oder andere Komponente im Ueberschuss zugegeben werden müsste.

Die Ausgangsmaterialien werden im wesentlichen quantitativ zu den Endprodukten umgesetzt, die wiederum in nahezu quantitativen Ausbeuten gewonnen werden können.

Die erfindungsgemässen Organozinn(carboalkoxy)-phenylmercaptide der Formel I können als Stabilisatoren für chlorhaltige Thermoplaste verwendet werden, wie z.B. für Polymerisate und Copolymerisate von Vinylchlorid, Vinylidenchlorid, chlorierte Polyolefine, nachchloriertes Polyvinylchlorid oder chlorierte Kautschuke. Von besonderer Bedeutung ist die Stabilisierung von Polyvinylchlorid (PVC) und polyvinylchloridhaltigen Formmassen. Hierbei kann es sich sowohl um Suspensions-PVC, Emulsions-PVC oder Massepolymerisate handeln.

Zu den halogenhaltigen Kunststoffen, die durch die Stabilisatoren nach vorliegender Erfindung gegen Hitze und Licht geschützt werden, gehören somit Polymere des Vinylchlorides und Vinylharze, die in deren Struktur Vinylchlorideinheiten enthalten, so zum Beispiel Copolymere des Vinylchlorids mit Vinylestern von aliphatischen Säuren, insbesondere Vinylacetat; Copolymere des Vinylchlorids mit Estern der Acryl- und Methacrylsäure, Copolymere mit Acrylnitril; Copolymere des Vinylchlorids mit Dienverbindungen und ungesättigten Dicarboxylsäuren oder deren Anhydriden, wie Copolymere des Vinylchlorids mit Diethylmaleat, Diethylfumarat oder Maleinsäureanhydrid; weiters, nachchlorierte Polymere und Copolymere des Vinylchlorids; Copolymere des Vinylchlorids und des Vinylidenchlorids mit ungesättigten Aldehyden, Ketonen und anderen, wie Acrolein, Crotonaldehyd, Vinylmethylketen, Vinylmethylether, Vinylisobutylether und ähnliche; Polymere des Vinylidenchlorides und Copolymere davon mit Vinylchlorid und anderen polymerisierbaren Verbindungen; Polymere des Vinylchloroacetates und des Dichlordivinylethers; chlorierte Polymere des Vinylacetates; chlorierte polymerische Ester der Acrylsäure und von α-substituierten Acrylsäuren; Polymere von chlorierten Styrolen, wie Dichlorstyrol; chlorierter Kautschuk, chlorierte Ethylenpolymere; Polymere und nachchlorierte Polymere des Chlorbutadiens und deren Copolymere mit Vinylchlorid; Kautschuk-Hydrochloride und chlorierte Kautschuk-Hydrochloride; weiters Mischungen der genannten Polymere unter sich oder mit anderen polymerisierbaren Verbindungen. Die korrespondierenden Bromide und Fluoride der genannten Verbindungen werden sinngemäss von den aufgezählten Verbindungsgruppen mitumfasst.

Bevorzugte Substrate sind auch Mischungen der vorstehend genannten Homo-und Copolymerisate, insbesondere Vinylchlorid-Homopolymerisate, mit anderen thermoplastischen und/oder elastomeren Polymeren, insbesondere mit ABS, MBS, NBR, NAR, SAN, EVA und modifiziertes EVA. Schliesslich sind auch die Mischungen aus Vinylchlorid-Homopolymer mit Weichmachern und/oder Copolymerharzen, in denen das Vinylchlorid-Polymer zu 20 - 80 Gew.-% enthalten ist und die Weichmacher z.B. Ester der Phthalsäure, der Adipinsäure oder der Benzoltricarbonsäuren sein können.

Der Zusatz der Verbindungen der Formel I zu den chlorhaltigen Thermoplasten kann z.B. in einer Menge von 0,1 bis 5 Gew.%, bezogen auf den Thermoplasten, erfolgen. Bevorzugt verwendet man 0.5 bis 3 Gew. %.

Hierbei können auch Gemische von zwei oder mehreren Verbindungen der Formel I verwendet werden. Vorzugsweise werden dann mindestens eine Mono- und mindestens eine Diorganozinnverbindung nach Formel I verwendet.

Weiters von Bedeutung und als vorzugsweise Verwendungsform anzusehen ist die Verwendung von Gemischen von Diorganozinnverbindungen nach Formel I und weiteren Stabilisatoren (Costabilisatoren), z.B. weiteren Organozinnstabilisatoren, vorzugsweise eines Dialkylzinncarboxylates im Gemisch als Stabilisator für die chlorhaltigen Thermoplasten.

Schliesslich kann ein stabilisierter Thermoplast neben wenigstens einer Verbindung mit der Formel I nach vorliegender Erfindung noch weitere Costabilisatoren, dabei insbesondere einen aus der nachfolgend aufgeführten Liste enthalten, wobei das Gewichtsverhältnis von Stabilisator nach Formel I zu Costabilisatoren von 60 zu 40 bis 97 zu 3 betragen kann.

Vorzugsweise beträgt das Gewichtsverhältnis von Stabilisator nach Formel I zu Costabilisator aus der Reihe der Dialkylzinncarboxylate von 60 zu 40 bis 90 zu 10.

Die bevorzugten Dialkylzinncarboxylate sind die Dialkylzinn-bis-carboxylate und basische Dialkylzinncarboxylate der Formel $R_2Sn(OOCR')_2$ bzw. $[R_2Sn(OOCR')]_2O$ und beispielsweise Dioctylzinn-bis-caprylat, Dioctylzinn-bis-laurat, basisches Dioctylzinn-bis-i-stearat und Dibutylzinn-bis-i-octoat.

Das Einarbeiten der erfindungsgemässen Stabilisatoren in die polymeren Substrate kann nach den üblichen Verfahren zur Einarbeitung von Additiven in Thermoplaste geschehen, beispielsweise durch Vermischen in Pulverform und anschliessende formgebende Verarbeitung oder durch Zugabe auf einem Walzenstuhl oder in einem Knetwerk. Gleichzeitig können hierbei die anderen Zusätze eingearbeitet werden, wie sie in der Technologie chlorhaltiger Thermoplaste gebräuchlich sind, beispielsweise die Gleitmittel, Weichmacher, Füllstoffe, Schlagfest-Zusätze, Pigmente, Lichtstabilisatoren, Antioxydantien oder die weiteren Thermostabilisatoren, wie z.B. Metallcarboxylate oder organische Phosphite.

Weitere anwendbare Costabilisatoren lassen sich der nachfolgenden Auflistung entnehmen.

Die erfindungsgemässen Stabilisatoren können vorteilhafterweise auch in Kombination in üblichen Mengen mindestens mit einem der herkömmlichen PVC-Stabilisatoren und/oder weiteren Zusätzen, eingesetzt werden, wie Epoxyverbindungen, Phosphite, Metallcarboxylate und Metallphenolate von Metallen der zweiten Haupt- und Nebengruppe des Periodensystems, oder auch anorganische Salze von Metallen der zweiten Nebengruppe des Periodensystems, wie z.B. $ZnCl_2$, sowie Antioxidantien.

Costabilisatoren werden bevorzugt in Mengen von 0,05 bis 6, inbesondere 0,1 bis 3 Gew.-%, bezogen auf die gesamte Zusammensetzung, eingearbeitet.

Geeignete herkömmliche Phosphite sind Phosphite der allgemeinen Formel

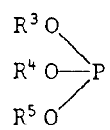

in der $R^3$, $R^4$ und $R^5$ gleich oder verschieden sind und $C_6$-$C_{18}$Alkyl, $C_6$-$C_{18}$Alkenyl, einen substituierten oder unsubstituierten Phenylrest oder $C_5$-$C_7$Cycloalkyl bedeuten.

Bedeuten $R^3$, $R^4$ und $R^5$ $C_6$-$C_{18}$Alkyl, so handelt es sich dabei z.B. um n-Hexyl, n-Octyl, n-Nonyl, Decyl, Dodecyl, Tetradecyl, Hexadecyl oder Octadecyl. Bevorzugt sind Alkylgruppen mit 8 bis 18 C-Atomen.

Als substituiertes Phenyl bedeuten $R^3$, $R^4$ und $R^5$ beispielsweise Tolyl, Ethylphenyl, Xylyl, Cumyl, Cymyl, Kresyl, 4-Methoxyphenyl, 2,4-Dimethoxyphenyl, Alkoxyphenyl, Butoxyphenyl, p-n-Octylphenyl, p-n-Nonylphenyl oder p-n-Dodecylphenyl.

Ganz besonders geeignete Phosphite sind Trioctyl-, Tridecyl-, Tridodecyl-, Tritetradecyl-, Tristearyl-, Trioleyl-, Triphenyl-, Trikresyl-, Tris-p-nonylphenyl- oder Tricyclohexylphosphit und besonders bevorzugt sind die Aryl-Dialkyl- sowie die Alkyl-Diaryl-Phosphite wie z.B. Phenyl-didecyl-, Nonylphenyl-didecyl-, (2,4-Di-tert.-butylphenyl)-di-dodecylphosphit, (2,6-Di-tert.-butylphenyl)-di-dodecylphosphit.

Beispiele von Metallcarboxylaten sind die Metallsalze von gesättigten, ungesättigten oder mit Hydroxylgruppen substituierten aliphatischen Carbonsäuren mit 6 bis 20 C-Atomen, wie Hexansäure, Heptansäure, Octansäure, 2-Ethylhexansäure, Undecylsäure, Laurinsäure, Myristinsäure, Palmitinsäure, Stearinsäure, 12-Oxystearinsäure, Oelsäure, Linolsäure oder Ricinolsäure. Ebenfalls von Interesse sind die Metallsalze von aromatischen Carbonsäuren wie beispielsweise substituierte Phenylbenzoate. Bevorzugt sind Metalle aus der Reihe Ba, Sr, Ca, Mg, Zn und Cd. Bevorzugte Metallcarboxylate sind beispielsweise Ca- oder Zn-Stearat und Zn- und Ca-Oleat.

Als Metallphenolate kommen insbesondere die Metallsalze von Phenolen mit 6-20 C-Atomen in Frage, beispielsweise Alkylphenolen wie p-tert.-Butyl-, p-Octyl-, p-Nonyl- oder p-Dodecylphenol. Beispiele hierfür sind Ba-p-tert.-Butylbenzoat oder Ba-p-n-Nonylphenolat.

Als weitere Costabilisatoren kommen in Betracht:

1. Antioxidantien

1.1. Alkylierte Monophenole,

z.B. 2,6-Di-tert.butyl-4-methylphenol, 2-Tert.butyl-4,6-dimethylphenol, 2,6-Di-tert.butyl-4-ethylphenol, 2,6-Di-tert.butyl-4-n-butylphenol, 2,6-Di-tert.butyl-4-i-butylphenol, 2,6-Di-cyclopentyl-4-methylphenol, 2-(a-Methylcyc-lo--hexyl)-4,6-dimethylphenol, 2,6-Di-octadecyl-4-methylphenol, 2,4,6-Tri-cyclohexylphenol, 2,6-Di-tert. butyl-4-methoxymethylphenol, 2,6-Di-nonyl-4-methylphenol.

1.2. Alkylierte Hydrochinone,

z.B. 2,6-Di-tert.butyl-4-methoxyphenol, 2,5-Di-tert.butyl-hydrochinon, 2,5-Di-tert.amyl-hydrochinon, 2,6-Di-phenyl-4-octadecyloxyphenol.

1.3. Hydroxylierte Thiodiphenylether,

z.B. 2,2′-Thio-bis-(6-tert.butyl-4-methylphenol), 2,2′-Thio-bis-(4-octylphenol), 4,4′-Thio-bis-(6-tert.butyl-3-methylphenol), 4,4′-Thio-bis-(6-tert.butyl-2-methylphenol).

1.4. Alkyliden-Bisphenole,

z.B. 2,2′-Methylen-bis-(6-tert.butyl-4-methylphenol), 2,2′-Methylen-bis-(6-tert.butyl-4-ethylphenol), 2,2′-Methylen-bis-[4-methyl-6-(α-methylcyclohexyl)-phenol], 2,2′-Methylen-bis-(4-methyl-6-cyclohexylphenol), 2,2′-Methylen-bis-(6-nonyl-4-methylphenol), 2,2′-Methylen-bis-(4,6-di-tert.butylphenol), 2,2′-Ethyliden-bis- (4,6- di-tert.butylphenol), 2,2′-Ethyliden-bis-(6-tert.butyl-4-isobutylphenol), 2,2′-Methylen-bis-[6-(α-methylbenzyl)-4-nonylphenol], 2,2′-Methylen-bis-[6-(α,α-dimethylbenzyl)-4-nonylphenol], 4,4′-Methylen-bis-(2,6-di-tert.butylphenol), 4,4′-Methylen-bis-(6-tert.butyl-2-methylphenol), 1,1-Bis-(5-tert.butyl-4-hydroxy-2- methylphenyl)- butan, 2,6-Bis-(3-tert.butyl-5-methyl-2-hydroxybenzyl)-4-methylphenol, 1,1,3-Tris-(5-tert.butyl-4-hydroxy-2-methylphenyl)-butan, 1,1-Bis-(5-tert.butyl-4-hydroxy-2-methylphenyl)-3-n-dodecylmercaptobutan, Ethylenglycol-bis-[3,3-bis-(3′-tert.butyl-4′-hydroxyphenyl)-butyrat], Bis-(3-tert.butyl-4-hydroxy-5-methylphenyl)- dicyclopentadien, Bis-[2-(3′-tert.butyl-2′-hydroxy-5′-methyl-benzyl)-6-tert.butyl-4-methyl-phenyl]-terephthalat.

1.5 Benzylverbindungen,

z.B. 1,3,5-Tris-(3,5-di-tert.butyl-4-hydroxybenzyl)-2,4,6-trimethylbenzol, Bis-(3,5-di-tert.butyl-4-hydroxybenzyl)-sulfid, 3,5-Di-tert.butyl-4-hydroxybenzyl-mercaptoessigsäure-isooctylester, Bis-(4-tert.butyl-3-hydroxy-2,6-dimethylbenzyl)dithiolterephthalat, 1,3,5-Tris-(3,5-di-tert.butyl-4-hydroxybenzyl)-isocyanurat, 1,3,5- Tris-(4-tert.butyl-3-hydroxy-2,6-dimethylbenzyl)-isocyanurat, 3,5-Di-tert.butyl-4-hydroxybenzyl-phosphonsäure-dioctadecylester, Ca-Salz des 3,5-Di-tert.butyl-4-hydroxybenzyl-phosphonsäure-monoethylester, 1,3,5-Tris-(3,5-dicyclohexyl-4-hydroxybenzyl)isocyanurat.

1.6. Acylaminophenole,

z.B. 4-Hydroxy-laurinsäureanilid, 4-Hydroxy-stearinsäureanilid, 2,4-Bis-(octylmercapto)-6-(3,5-di-tert.butyl-4-hydroxyanilino)-s-triazin, N-(3,5-di-tert.butyl-4-hydroxyphenyl)-carbaminsäureoctylester.

1.7. Ester der β-(3,5-Di-tert.butyl-4-hydroxyphenyl)-propionsäure

mit ein- oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-(hydroxyethyl)-isocyanurat, N,N′-Bis-(hydroxyethyl)-oxalsäurediamid.

1.8. Ester der β-(5-tert.Butyl-4-hydroxy-3-methylphenyl)-propionsäure

mit ein- oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid.

1.9. Ester der β-(3,5-Dicyclohexyl-4-hydroxyphenyl)-propionsäure

mit ein- oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid.

1.10. Amide der β-(3,5-Di-tert.butyl-4-hydroxyphenyl)-propionsäure,

wie z.B. N,N'-Bis-(3,5-di-tert.butyl-4-hydroxyphenylpropionyl)-hexamethylendiamin, N,N'-Bis-(3,5-di-tert.butyl-4-hydroxyphenylpropionyl)-trimethylendiamin, N,N'-Bis-(3,5-di-tert.butyl-4-hydroxyphenylpropionyl)-hydrazin.

2. UV-Absorber und Lichtschutzmittel

2.1. 2-(2'-Hydroxyphenyl)-benztriazole,

wie z.B. das 5'-Methyl-, 3',5'-Di-tert.butyl-, 5'-tert.Butyl-, 5'-(1,1,3,3-Tetramethylbutyl)-, 5-Chlor-3',5'-di-tert.butyl-, 5-Chlor-3'-tert.butyl-5'-methyl-, 3'-sec.Butyl-5'-tert.butyl, 4'-Octoxy-, 3',5'-Di-tert.amyl-, 3',5'-Bis-(α,α-dimethylbenzyl)-Derivat.

2.2. 2-Hydroxybenzophenone,

wie z.B. das 4-Hydroxy-' 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat.

2.3. Ester von gegebenenfalls substituierten Benzoesäuren,

wie z.B. 4-tert.Butyl-phenylsalicylat, Phenylsalicylat, Octylphenyl-salicylat, Dibenzoylresorcin, Bis-(4-tert.butylbenzoyl)-resorcin, Benzoylresorcin, 3,5-Di-tert.butyl-4-hydroxybenzoesäure-2,4-di-tert.butylphenylester, 3,5-Di-tert.butyl-4-hydroxybenzoesäurehexadecylester.

2.4. Acrylate,

wie z.B. α-Cyan-β,β-diphenylacrylsäure-ethylester bzw. -isooctylester, α-Carbomethoxy-zimtsäuremethylester, α-Cyano-β-methylp-methoxy-zimtsäuremethylester bzw. -butylester, α-Carbomethoxy-p-methoxy-zimtsäure-methylester, N-(β-Carbomethoxy-β-cyanovinyl)-2-methylindolin.

2.5. Nickelverbindungen,

wie z.B. Nickelkomplexe des 2,2'-Thio-bis-[4-(1,1,3,3-tetramethylbutyl)-phenols], wie der 1:1- oder der 1:2-Komplex, gegebenenfalls mit zusätzlichen Liganden, wie n-Butylamin, Triethanolamin oder N-Cyclohexyl-diethanolamin, Nickeldibutyldithiocarbamat, Nickelsalze von 4-Hydroxy-3,5-di-tert.butylbenzylphosphonsäure-monoalkylestern, wie vom Methyl- oder Ethylester, Nickelkomplexe von Ketoximen, wie von 2-Hydroxy-4-methyl-phenyl-undecylketonoxim, Nickelkomplexe des 1-Phenyl-4-lauroyl-5-hydroxy-pyrazols, gegebenenfalls mit zusätzlichen Liganden.

2.6. Sterisch gehinderte Amine,

wie z.B. Bis-(2,2,6,6-tetramethylpiperidyl)-sebacat, Bis-(1,2,2,6,6-pentamethylpiperidyl)-sebacat, n-Butyl-3,5-di-tert.butyl-4-hydroxybenzyl-malonsäure-bis(1,2,2,6,6-pentamethylpiperidyl)-ester, Kondensationsprodukt aus 1-Hydroxyethyl-2,2,6,6-tetramethyl-4-hydroxypiperidin und Bernsteinsäure, Kondensationsprodukt aus N,N'-Bis-(2,2,6,6-Tetramethyl-4-piperidyl)-hexamethylendiamin und 4-tert.Octylamino-2,6-dichlor-1,3,5-s-triazin, Tris-(2,2,6,6-tetramethyl-4-piperidyl)-nitrilotriacetat, Tetrakis-(2,2,6,6-tetramethyl-4-piperidyl)-1,2,3,4-butantetraoat, 1,1'-(1,2-Ethandiyl)-bis-(3,3,5,5-tetramethyl-piperazinon).

2.7. Oxalsäurediamide,

wie z.B. 4,4′-Di-octyloxy-oxanilid, 2,2′-Di-octyloxy-5,5′-di-tert.butyl-oxanilid, 2,2′-Di-dodecyloxy-5,5′di-tert.butyl-oxanilid, 2-Ethoxy-2′-ethyl-oxanilid, N,N′-Bis-(3-dimethylaminopropyl)-oxalamid, 2-Ethoxy-5-tert.butyl-2′-ethyloxanilid und dessen Gemisch mit 2-Ethoxy-2′-ethyl-5,4′-di-tert.butyl-oxanilid, Gemische von o-und p-Methoxy- sowie von o- und p-Ethoxy-di-substituierten Oxaniliden.

3. Metalldesaktivatoren,

wie z.B. N,N′-Diphenyloxalsäurediamid, N-Salicylal-N′-salicyloylhydrazin, N,N′-Bis-(salicyloyl)-hydrazin, N,N′-Bis-(3,5-di-tert.butyl-4-hydroxyphenylpropionyl)-hydrazin, 3-Salicyloylamino-1,2,4-triazol, Bis-(benzyliden)-oxalsäuredihydrazid.

4. Phosphite und Phosphonite,

wie z.B. Tris-(nonylphenyl)-phosphit, Trilaurylphosphit, Trioctadecylphosphit, Distearyl-pentaerythritdiphosphit, Tris-(2,4-di-tert.butylphenyl)-phosphit, Diisodecylpentaerythrit-diphosphit, Bis-(2,4-di-tert.butylphenyl)-pentaerythritdiphosphit, Tristearyl-sorbit-triphosphit, Tetrakis-(2,4-di-tert.butylphenyl)-4,4′-biphenylendiphosphonit, 3,9-Bis-(2,4-di-tert.butylphenoxy)-2,4,8,10-tetraoxa-3,9-diphosphaspiro[5.5]undecan.

5. Basische Co-Stabilisatoren,

wie z.B. Melamin, Polyvinylpyrrolidon, Dicyandiamid, Triallylcyanurat, Harnstoff-Derivate, Hydrazin-Derivate, Amine, Polyamide, Polyurethane, Alkali- und Erdalkalisalze höherer Fettsäuren, beispielsweise Ca-Stearat, Zn-Stearat, Mg-Stearat, Na-Ricinoleat, K-Palmitat, Antimonbrenzcatechinat oder Zinnbrenzcatechinat.

6. Füllstoffe und Verstärkungsmittel,

wie z.B. Calciumcarbonat, Silikate, Glasfasern, Asbest, Talk, Kaolin, Glimmer, Bariumsulfat, Metalloxide und -hydroxide, Russ, Graphit.

7. Sonstige Zusätze,

wie z.B. Weichmacher, Gleitmittel, Emulgatoren, Pigmente, Optische Aufheller, Flammschutzmittel, Antistatika, Treibmittel.

Bevorzugte Antioxidantien sind alkylierte Monophenole, Alkyliden-Bisphenole und phenylsubstituierte Propionsäureester, insbesondere aber 2,6-Di-tert.-butyl-p-kresol, 2,2-Bis-(4′-hydroxyphenyl)-propan und ß-(3,5-Di-tert.-butyl-4-hydroxyphenyl)-propionsäure-n-octadecylester.

Die erfindungsgemässen Thermoplaste können nach den dafür gebräuchlichen Formgebungsverfahren z.B. durch Extrusion, Spritzgiessen oder Kalandrieren zu Formteilen verarbeitet werden. Auch die Verwendung als Plastisole ist möglich.

Die Thermostabilisierung von chlorhaltigen Thermoplasten mit den erfindungsgemässen Stabilisatoren-Gemischen ist hervorragend. Auch ihr Gehalt an flüchtigen Anteilen und ihr Geruch sind gering. Zudem sind sie mit den üblichen Gleitmitteln gut verträglich.

Die nachfolgenden Beispiele dienen der näheren Erläuterung der Erfindung. Dabei sind, wenn nicht anders definiert, Teile Gewichtsteile und Prozente Gewichtsprozente.

Beispiele:

Beispiel 1:

Herstellung von Di-n-octylzinn-bis-[2-(2-ethylhexyloxycarbonyl)phenylmercaptid]

Ein Gemisch aus

41,6 g Dioctylzinnoxid (99%ig) und

61,4 g 2-Ethylhexylthiosalicylat (99%ig)

wird 45 min bei einem Vakuum von 20 mbar auf 100°C erhitzt und das bei der Reaktion entstehende Wasser abgezogen. Nach Beendigung der Reaktion erfolgt eine Klärfiltration. Das Reaktionsprodukt ist eine gelbe, ölige Flüssigkeit.

Brechungsindex $n_D^{20}$: 1,5475
Analyse % Sn: 13,3 (berechnet 13,6)
% S: 7,3 (berechnet 7,3)

Beispiel 2:

Herstellung von n-Octylzinn-tris-[4-(ethoxycarbonyl)-phenylmercaptid]
Ein Gemisch aus
44,1 g Octylzinntrichlorid (99%ig)
71,2 g p-Mercaptobenzoesäureethylester
100 ml Toluol und
50 ml Wasser
wird bei 60°C unter kräftigem Rühren mit 30,9 g 50%iger Natronlauge versetzt, wobei darauf geachtet wird, dass der pH-Wert der Mischung zu keinem Zeitpunkt den Wert von 7,0 überschreitet. Nach Beendigung der Reaktion wird die organische Phase abgetrennt und zweimal mit Wasser gewaschen. Toluol und restliches Wasser werden durch Destillation abgetrennt. Das erhaltene Produkt ist eine hellgelbe, ölige Flüssigkeit.

Brechungsindex $n_D^{20}$: 1,6138
Analyse % Sn: 15,3 (berechnet 15,3)
% S : 12,1 (berechnet 12,4)

Beispiel 3:

Herstellung von Bis-carbobutoxyethylzinn-bis-[2-(ethoxycarbonyl)-phenylmercaptid]
Wie in Beispiel 2 beschrieben, werden
61,8 g Dicarbobutoxyethylzinndichlorid (98%ig) mit
49,8 g Ethylthiosalicylat (99%ig)
in 43,2 g 25%iger, wässriger NaOH-Lösung umgesetzt.
Das Reaktionsprodukt ist eine hellgelbe Flüssigkeit.

Brechungsindex $n_D^{20}$: 1,5778
Analyse % Sn: 15,9 (berechnet 16,1)
% S : 8,6 (berechnet 8,7)

Beispiel 4:

Herstellung von Dilaurylzinn-bis-[2-(ethoxycarbonyl)phenylmercaptid]
Wie in Beispiel 2 beschrieben, werden
65,1 g Dilaurylzinndichlorid (99%ig) mit
44,9 g Ethylthiosalicylat (99%ig)
in 39,0 g 25%iger wässriger NaOH-Lösung umgesetzt. Das Reaktionsprodukt ist eine hellgelbe, ölige Flüssigkeit.

Brechungsindex $n_D^{20}$: 1,5540
Analyse % Sn: 14,6 (berechnet 14,5)
% S : 7,8 (berechnet 7,8)

Beispiel 5:

Herstellung von Di-n-octylzinn-bis-[4-(2-ethylhexyloxycarbonyl)phenylmercaptid]

Wie in Beispiel (1) beschrieben, werden
41,6 g Dioctylzinnoxid (99%ig) mit
61,4 g p-Mercaptobenzoesäure-2-ethylhexylester (99%ig)
umgesetzt.

Das Reaktionsprodukt ist eine hellgelbe, ölige Flüssigkeit.

| | |
|---|---|
| Ausbeute: | 98 % d.Th. |
| Brechungsindex $n_D^{20}$ | 1,5400 |
| Analyse: | % Sn 13,4 (ber. 13,6) |
| | % S 7,3 (ber. 7,3) |

Beispiel 6:

Herstellung von Di-n-octylzinn-bis-[3-(ethoxycarbonyl)phenylmercaptid]

Wie in Beispiel (1) beschrieben, werden
51,6 g Dioctylzinnoxid (99%ig) mit
51,7 g m-Mercaptobenzoesäureethylester (99,5%ig)
umgesetzt.

Das Reaktionsprodukt ist eine hellgelbe, ölige Flüssigkeit.

| | |
|---|---|
| Ausbeute: | 98 % d.Th. |
| Brechungsindex $n_D^{20}$ | 1,5630 |
| Analyse: | % Sn 16,7 (ber. 16,8) |
| | % S 9,0 (ber. 9,1) |

Beispiel 7:

Mischung aus Mono- und Di-n-octylzinn-4-ethoxycarbonylphenylmercaptiden

Analog dem Beispiel 1 werden
39,4 g Dioctylzinnoxid (99%ig) und
7,8 g Monooctylzinnoxid (99,5%ig) mit
56,3 g p-Mercaptobenzoesäureäthylester (99,5%ig)
umgesetzt.

Als Reaktionsprodukt wurde eine gelbe, ölige Flüssigkeit erhalten.

| | |
|---|---|
| Ausbeute: | 98 % d.Th. |
| Brechungsindex $n_D^{20}$: | 1,5785 |
| Analyse: | % Sn = 16,2 (ber. 16,4) |
| | " S = 9,8 (ber. 9,85) |

In tabellarischer Uebersicht sind weitere Verbindungen aufgeführt, die sinngemäss und nach analogen Verfahren, wie in den Beispielen 1 bis 7 beschrieben hergestellt werden. Die Verbindungen weisen, wie z.B. auch die verbindungen nach Beispielen 1, 3 und 4, die allgemeine Formel

$$R_2Sn(\text{-S-o-}C_6H_4\text{-COOR}')_2$$

auf, wobei sich die Bedeutung von R und R′ für Beispiele 8 und 9 der Tabelle I entnehmen lässt.

Tabelle I

| Nr. | R | R' | $n_D^{20}$ | Beschreibung |
|---|---|---|---|---|
| 8 | $n-C_8H_{17}$ | $C_2H_5$ | 1,5724 | l, hellgelb |
| 9 | $n-C_8H_{17}$ | $i-C_4H_9$ | 1,5601 | l, hellgelb |

l = flüssig

In Tabelle II ist eine weitere Verbindung angeführt, deren Herstellung in analoger Weise nach den Verfahren der vorhergehenden Beispiele erfolgt. Die Verbindung weist, wie auch die vorhergehenden Beispiele 5 und 6, die allgemeine Formel

$$R_2Sn(-S-p-C_6H_4-COOR')_2$$

auf, wobei die Substituenten R und R' für Beispiel 10 sich der Tabelle II entnehmen lassen.

Tabelle II

| Nr. | R | R' | $n_D^{20}$ | Beschreibung |
|---|---|---|---|---|
| 10 | $n-C_8H_{17}$ | $C_2H_5$ | 1,5693 | l, gelb, ölig |

l = flüssig

Die Verbindungen nach den Beispielen 1 bis 10 werden verschiedenen Testverfahren unterzogen. Die erzielten Resultate lassen sich den nachfolgenden Aufstellungen entnehmen.

Thermische Beständigkeit

Beispiel 11:

| Verbindung gemäss Beispiel | TGA (1) Gewichtsverlust (%) 160°C | 200°C | Ofentest (2) 160°/45 min Gew.verlust (Verfärbung) | 200°/120 min Gew.verlust (Verfärbung) |
|---|---|---|---|---|
| 1 | 0,80 | 1,3 | 2,7 * (hellgelb) | 10,1 * (gelb-orange) |

* Farbzahl nach Gardner

Beispiel 12:

| Verbindung gemäss Beispiel | TGA (1) Gewichtsverlust (%) | |
|---|---|---|
| | 160°C | 200°C |
| 5 | 0,68 | 1,4 |

(1) Thermogravimetrische Analyse, Aufheizrate 10°C/min, Inertgasatmosphäre

(2) Ofentest: jeweils 5 g der Probe werden im Umlufttrockenschrank unter Luftzutritt zu den gegebenen Bedingungen belastet. Anschliessend werden Gewichtsverlust (in %) und Verfärbung der ursprünglich hellgelben Proben festgestellt.

Bewertung:

Für die Praxis der PVC-Verarbeitung ist die Beständigkeit der Stabilisatoren unter Luftzutritt entscheidend. Die geringe Gewichtsabnahme und Verfärbung der erfindungsgemässen Verbindungen beweist deren ausgezeichnete Stabilität gegen Oxidation und Hydrolyse.

Hitzetests

(Prüfung der Stabilisatorwirkung in PVC)

a) statisch:

Das PVC, der Weichmacher und das Gleitmittel werden mit dem Stabilisator oder Stabilisatorgemischen vermischt, während den nachstehend angegebenen Zeiträumen bei 190°C auf einem Mischwalzwerk gewalzt und einem statischen Hitzetest unterworfen. Vom gebildeten Walzfell werden Testfolienstücke von 0,3 mm Dicke entnommen. Die Folienproben werden in einem Ofen bei 190°C thermisch belastet und in zeitlichen Abständen von 10 Minuten an einer Probe die Vergilbung (Yellowness Index YI nach ASTM D 1925-70) bestimmt. Die Ergebnisse sind in den nachstehenden Tabellen zusammengefasst.

b) dynamisch:

Die Verarbeitung des Dryblends am Mischwalzwerk erfolgt wie in a) beschrieben. Das Walzfell wird jedoch nach dem vollständigen Gelieren nicht wie oben abgenommen, sondern der Walzvorgang wird bis zur deutlichen Verfärbung der Masse fortgesetzt. Entsprechend den jeweils angegebenen Zeitintervallen werden Folienstücke entnommen, deren Vergilbungsgrad nach der oben genannten Messmethode bestimmt wird.

Beispiele 13 - 15: statischer Hitzetest

Grundrezeptur:

| | |
|---|---|
| S-PVC (K-Wert 58) | 100 Teile |
| Montanwachs | 0,2 Teile |
| Fettsäureglyzerinester | 1,0 Teile |
| Stabilisator gemäss Tabelle | 1,2 Teile |

Walzdauer 5 min.

| Bsp. | Stabilisator Verbindung gemäss Beispiel | Vergilbung (YI n. ASTM D 1925-70) | | | |
|---|---|---|---|---|---|
| | | Belastungszeit in min | | | |
| | | 0 | 10 | 20 | 30 |
| 13 | 8 | 4,0 | 6 | 15 | 42 |
| 14 | 3 | 7,0 | 9 | 19 | 43 |
| 15 | 4 | 4,0 | 7 | 18 | 57 |

Beispiel 16:

Grundrezeptur wie Bsp. 13 - 15, Walzdauer 10 min.

| Bsp. | Stabilisator Verbindung gemäss Beispiel | Vergilbung (YI n. ASTM D 1925-70) | | | | |
|---|---|---|---|---|---|---|
| | | Belastungszeit in min | | | | |
| | | 0 | 10 | 20 | 30 | 40 |
| 16 | 2 1,2 Teile | 11 | 23 | 45 | 81 | 120 |

Beispiel 17 - 23: dynamischer Hitzetest

Grundrezeptur:

| | |
|---|---|
| S-PVC (K-Wert 60) | 100 Teile |
| Montanwachs | 0,2 Teile |
| Glyzerinester | 1,0 Teile |
| Stabilisator | 1,2 Teile |
| Walzdauer | siehe Tabelle |

| Bsp. | Stabilisator Verbindung gemäss Beispiel: | Vergilbung (YI n. ASTM D 1925-70) | | | | |
|---|---|---|---|---|---|---|
| | | Belastungszeit in min | | | | |
| | | 10 | 20 | 30 | 40 | 50 |
| 17 | 8 | 5,6 | 29 | 79 | 120 | |
| 18 | 10 | 21 | 33 | 109 | | |
| 19 | 6 | 28 | 36 | 44 | 141 | |
| 20 | Gemisch aus: 3 Gew.-Teilen n-Octylzinn-tris-[4-(ethoxycarbonyl)-phenylmercaptid] und 7 Gew.-Teilen Di-n-Octylzinn-bis-[4-(ethoxycarbonyl)-phenylmercaptid] | 17 | 22 | 26 | 96 | 115 |
| 21 | Gemisch aus: 3 Gew.-Teilen n-Octylzinn-tris-[3-(ethoxycarbonyl)-phenylmercaptid] und 7 Gew.-Teilen Di-n-Octylzinn-bis-[3-(ethoxycarbonyl)-phenylmercaptid] | 21 | 24 | 25 | 39 | 102 |
| 22 | Gemisch aus: 3 Gew.-Teilen n-Octylzinn-tris-[4-(isooctylcarbonyl)-phenylmercaptid] und 7 Gew.-Teilen Di-n-Octylzinn-bis-[4-(isooctylcarbonyl)-phenylmercaptid] | 23 | 29 | 93 | 116 | |
| 23 | Gemisch aus: 3 Gew.-Teilen n-Octylzinn-tris-[3-(isooctylcarbonyl)-phenylmercaptid] und 7 Gew.-Teilen Di-n-Octyl-zinn-bis-[3-(isooctylcarbo-nyl)phenylmercaptid | 25 | 29 | 33 | 102 | 121 |

Beispiele 24 - 26: statischer Hitzetest

Grundrezeptur:

| | | |
|---|---|---|
| S-PVC (K-Wert 70) | 100 | Teile |
| DOP | 47 | Teile |

| | | |
|---|---|---|
| ESBO | 3 | Teile |
| PE-Wachs | 0,1 | Teile |
| Stabilisator | 1,0 | Teile |
| Walzdauer | 10 | min |

| Bsp. | Stabilisator Verbindung gem. Bsp. | Vergilbung (YI n. ASTM D 1925-70) | | | | | | | | |
|---|---|---|---|---|---|---|---|---|---|---|
| | | Belastungszeit in min | | | | | | | | |
| | | 0 | 10 | 20 | 30 | 40 | 50 | 60 | 70 | 80 |
| 24 | 11 | 1,5 | 2,5 | 3,4 | 5,3 | 13 | 25 | 46 | 59 | 73 |
| 25 | 13 | 1,9 | 4,3 | 6,2 | 8,2 | 14 | 15 | 22 | 40 | 80 |
| 26 | 14 | 2,5 | 5,2 | 7,0 | 10 | 12 | 16 | 25 | 33 | 106 |

## Patentansprüche

1. Verbindungen der Formel I

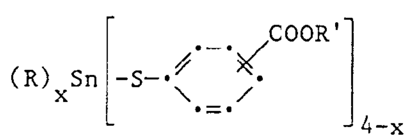

(I)

worin R $C_8$-$C_{14}$-Alkyl, Phenyl, $C_7$-$C_9$ Aralkyl oder R″OOC-$CH_2$-$CH_2$- bedeutet, R′ $C_2$-$C_{18}$-Alkyl, $C_5$-$C_{12}$ Cycloalkyl, Phenyl, Naphthyl, $C_7$-$C_{30}$ Alkaryl oder $C_7$-$C_{18}$ Aralkyl bedeutet und R″ $C_1$-$C_{14}$ Alkyl, Phenyl oder $C_7$-$C_9$ Aralkyl bedeutet und x gleich 1 oder 2 ist, mit der Massgabe, dass, wenn x = 1 ist, die Gruppe COOR′ nicht in ortho-Stellung zur Mercaptogruppe steht.

2. Verbindungen gemäss Anspruch 1 der Formel

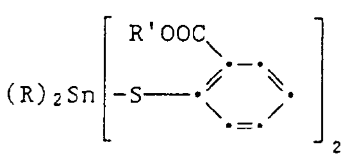

3. Verbindungen gemäss Anspruch 1, worin R Alkyl mit 8 bis 12 C-Atomen, oder Carbo-$C_2$-$C_5$-alkoxyethyl bedeutet.

4. Verbindungen gemäss Anspruch 1, worin R′ Alkyl mit 2 bis 12 C-Atomen bedeutet.

5. Verbindung gemäss Anspruch 1, worin im Phenylrest die veresterte Säuregruppe in ortho-Stellung zur Mercaptogruppe steht.

6. Verbindung gemäss Anspruch 1

$$(n\text{-}C_8H_{17})_2Sn(\text{-}S\text{-}p\text{-}C_6H_4\text{-}COOC_8H_{17})_2.$$

7. Verwendung der in Anspruch 1 definierten Verbindungen als Stabilisatoren für chlorhaltige Thermoplaste.

8. Verwendung gemäss Anspruch 7 als Stabilisatoren für Polyvinylchlorid und für polyvinylchloridhaltige

Polymere.

9. Verwendung gemäss Anspruch 7, wobei man mindestens zwei Verbindungen der Formel I einsetzt.

10. Verwendung gemäss Anspruch 7, wobei man mindestens eine Mono- und mindestens eine Diorganozinnverbindung der Formel I einsetzt.

11. Verwendung gemäss Anspruch 7 einer Diorganozinnverbindung nach Formel I und eines Dialkylzinncarboxylates im Gemisch.

12. Chlorhaltiger Thermoplast, dadurch gekennzeichnet, dass dieser 0,1 bis 5 Gew.-%, bezogen auf den Thermoplasten, wenigstens einer Verbindung des Anspruches 1 mit der Formel I als Stabilisator enthält.

13. Thermoplast nach Anspruch 12, dadurch gekennzeichnet, dass dieser zusätzlich Costabilisatoren aus der Reihe der Dialkylzinncarboxylate in einem Gewichtsverhältnis von Stabilisator der Formel 1 zu Costabilisator von 60 zu 40 bis 97 zu 3 enthält.

14. Thermoplast nach Anspruch 12, dadurch gekennzeichnet, dass dieser Costabilisatoren in einem Gewichtsverhältnis von Stabilisator der Formel I zu Costabilisator von 60 zu 40 bis 90 zu 10 enthält.

## Claims

1. A composed of the formula I

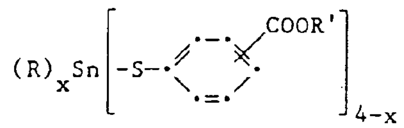

(I)

in which R is $C_8$-$C_{14}$alkyl, phenyl, $C_7$-$C_9$aralkyl or R″OOC-$CH_2$-$CH_2$-, R′is $C_2$-$C_{18}$alkyl, $C_5$-$C_{12}$cycloalkyl, phenyl, naphthyl, $C_7$-$C_{30}$alkaryl or $C_7$-$C_{18}$aralkyl and R″ is $C_1$-$C_{14}$alkyl, phenyl or $C_7$-$C_9$aralkyl and x is 1 or 2, subject to the proviso that, if x is 1, the group COOR′ is not located in the ortho-position relative to the mercapto group.

2. A compound according to claim 1 of the formula

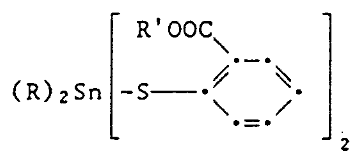

3. A composed according to claim 1, in which R is alkyl having 8 to 12 C atoms or is carbo-$C_2$-$C_5$alkoxyethyl.

4. A compound according to claim 1, in which R′ is alkyl having 2 to 12 C atoms.

5. A compound according to claim 1, in which the esterified acid group in the phenyl radical is located in the ortho-position relative to the mercapto group.

6. A compound according to claim 1

$$(n\text{-}C_8H_{17})_2Sn(\text{-}S\text{-}p\text{-}C_6H_4\text{-}COOC_8H_{17})_2.$$

7. The use of a compound defined in claim 1 as a stabilizer for chlorine-containing thermoplastics.

8. The use according to claim 7 as a stabilizer for polyvinyl chloride and polymers containing polyvinyl chloride.

9. The use according to claim 7, involving the use of at least two compounds of the formula I.

10. The use according to claim 7, involving the use of at least one monoorganotin compound and at least one diorganotin compound of the formula I.

11. The use according to claim 7 of a mixture of a diorganotin compound of the formula I and a dialkyltin carboxylate.

12. A chlorine-containing thermoplastic which contains 0.1 to 5% by weight relative to the thermoplastic, of at least one compound according to claim 1 of the formula I as stabilizer.

13. A thermoplastic according to claim 12, which contains, in addition, co-stabilizers belonging to the series of the dialkyltin carboxylates in a ratio by weight of stabilizer of the formula I to co-stabilizer from 60 to 40 up to 97 to 3.

14. A thermoplastic according to claim 12, which contains co-stabilizers in a ratio by weight of stabilizer of the formula I to co-stabilizer from 60 to 40 up to 90 to 10.

## Revendications

1. Composés répondant à la formule I :

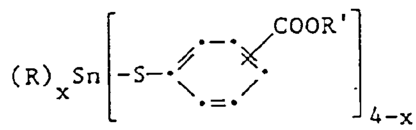

(I)

dans laquelle R représente un alkyle en $C_8$-$C_{14}$, un phényle, un aralkyle en $C_7$-$C_9$ ou un radical R″OOC-$CH_2$-$CH_2$-, R′ représente un alkyle en $C_2$-$C_{18}$, un cycloalkyle en $C_5$-$C_{12}$, un phényle, un naphtyle, un alkylaryle en $C_7$-$C_{30}$ ou un aralkyle en $C_7$-$C_{18}$, R″ représente un alkyle en $C_1$-$C_{14}$, un phényle ou un aralkyle en $C_7$-$C_9$, et x est égal à 1 ou à 2, avec la condition que, lorsque x est égal à 1, le radical COOR′ ne soit pas en position ortho par rapport au radical mercapto.

2. Composés selon la revendication 1 qui répondent à la formule :

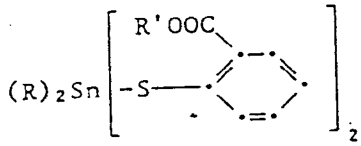

3. Composés selon la revendication 1 dans lesquels R représente un alkyle contenant de 8 à 12 atomes de carbone ou un radical alcoxycarbonyl-éthyle dont l'alcoxy contient de 2 à 5 atomes de carbone.

4. Composés selon la revendication 1 dans lesquels R′ représente un alkyle contenant de 2 à 12 atomes de carbone.

5. Composé selon la revendication 1 caractérisé en ce que le radical acide estérifié porté par le radical phényle se trouve en position ortho par rapport au radical mercapto.

6. Composé selon la revendication 1, en l'espèce le composé de formule :

$$(n\text{-}C_8H_{17})_2Sn(\text{-}S\text{-}p\text{-}C_6H_4\text{-}COOC_8H_{17})_2.$$

7. Application des composés définis à la revendication 1 comme stabilisants pour des matières thermoplastiques chlorées.

8. Application selon la revendication 7 comme stabilisants pour le poly-(chlorure de vinyle) ou pour des polymères contenant du poly-(chlorure de vinyle).

9. Application selon la revendication 7 selon laquelle on utilise au moins deux composés de formule I.

10. Application selon la revendication 7 selon laquelle on utilise au moins un composé mono-organostannique de formule I et au moins un composé diorgano-stannique de formule I.

11. Application selon la revendication 7 d'un composé diorgano-stannique de formule I et d'un carboxylate de dialkyl-étain en mélange.

12. Matière thermoplastique chlorée caractérisée en ce qu'elle contient, comme stabilisant, de 0,1 à 5% en poids, par rapport à la matière thermoplastique, d'au moins un composé de formule I selon la revendication 1.

13. Matière thermoplastique selon la revendication 12 caractérisée en ce qu'elle contient en outre des co-stabilisants de la série des carboxylates de dialkyl-étains en une quantité correspondant à un rapport pondéral du stabilisant de formule I au co-stabilisant compris entre 60:40 et 97:3.

14. Matière thermoplastique selon la revendication 12 caractérisée en ce qu'elle contient des co-stabilisants en une quantité correspondant à un rapport pondéral du stabilisant de formule I au co-stabilisant compris entre 60:40 et 90:10